# FASCICULE DE BREVET EUROPEEN

(11) **EP 4 628 240 B1**
(45) Date de publication et mention de la délivrance du brevet: **13.05.2026**
(21) Numéro de dépôt: 25158877.8
(22) Date de dépôt: 19.02.2025
(51) Int. Cl.: B23K 11/11, B23K 11/31

(54) **APPAREIL DE SOUDAGE PAR RÉSISTANCE PRÉSENTANT UNE ÉLECTRODE FIXE ET UNE ÉLECTRODE MOBILE ENTRE UNE POSITION DE TRAVAIL ET DEUX POSITIONS DISTINCTES DE REPOS**
WIDERSTANDSSCHWEISSVORRICHTUNG MIT FESTER ELEKTRODE UND BEWEGLICHER ELEKTRODE ZWISCHEN ARBEITSPOSITION UND ZWEI VERSCHIEDENEN RUHEPOSITIONEN
RESISTANCE WELDING APPARATUS HAVING A FIXED ELECTRODE AND AN ELECTRODE MOVABLE BETWEEN A WORKING POSITION AND TWO SEPARATE REST POSITIONS

(30) Priorité: 04.03.2024 FR 2402129
(43) Date de publication de la demande: 08.10.2025
(73) Titulaire: GYS, 53940 Saint-Berthevin (FR)
(72) Inventeur: BOUYGUES, Bruno, 75016 PARIS (FR); FRISON, Arnaud, 53100 CHATILLON SUR SEINE (FR); GABILLARD, Mickael, 53970 MONTIGNE LE BRILLANT (FR)
(74) Mandataire: Vidon Brevets & Stratégie

(56) Documents cités:
- DE-U1- 8 815 009
- US-A1- 2011 192 829

## Description

### Domaine de l'invention

Le domaine de l'invention est celui des appareils de soudage par résistance.

L'invention concerne plus particulièrement de tels appareils comportant une pince destinée à supporter un bras qui est constitué d'une première partie supportant une électrode fixe et d'une deuxième partie supportant une électrode mobile en translation (voir par exemple DE8815009, formant la base du préambule de la revendication 1).

### Art antérieur et ses inconvénients

Les appareils de soudage par résistance disposent d'un moyen de génération de très forts courants électrique qui passent à travers des électrodes par l'intermédiaire de contacts électriques contenues dans chacune d'entre-elles. Les électrodes sont configurées pour enserrer des matériaux, notamment des éléments métalliques, en vue de les souder en réalisant notamment un point de soudure.

Lors de la réalisation du point de soudure, le passage des très forts courants entre les électrodes vient chauffer les matériaux compte tenu de la plus grande résistance électrique de ces derniers que celle des électrodes. Par exemple, les très forts courants qui passent à travers les électrodes sont compris entre 1 000 A et 15 000 Ampères.

Il est connu des appareils de soudage par point doté d'un bloc comportant une pince destinée à supporter un bras, par exemple en forme de « C », comportant une première partie supportant une électrode fixe et une deuxième partie supportant une électrode mobile en translation. Les appareils de soudage actuels comprennent un actionneur, par exemple contenant un vérin pneumatique. L'utilisation d'un tel vérin pneumatique permet de contrôler et d'imprimer un mouvement linéaire à l'électrode mobile. Ce mouvement linéaire permet, dans un premier sens, de rapprocher l'électrode mobile de l'électrode fixe en vue d'enserrer, dans une position de travail, les matériaux à souder, la pince étant alors dans une position fermée, et dans un deuxième sens opposé au premier sens, d'éloigner l'électrode mobile de l'électrode fixe en vue de desserrer ces matériaux, la pince passant de la position fermée à une position ouverte.

Lorsque la pince est ouverte, des moyens de blocage bloquent l'électrode mobile dans une position de repos éloignée de sa position de travail.

Classiquement, le mouvement linéaire de l'électrode mobile depuis la position de repos vers la position de travail est engagé après activation d'un bouton de commande configuré pour mettre en surpression une chambre du vérin pneumatique.

Une fois le point de soudure réalisée, l'électrode mobile est configurée pour se déplacer alors depuis la position de travail vers la position de repos après désactivation du bouton de commande par exemple, de sorte à induire une dépression dans la chambre du vérin pneumatique qui était alors en surpression.

Un inconvénient de ces appareils de soudage par résistance réside dans le fait que la distance qui sépare la position de travail de la position de repos de l'électrode mobile est fixe. En particulier, cette distance est prédéfinie et optimisée en fonction des géométries et des épaisseurs des matériaux à souder.

Pour surmonter cet inconvénient, des appareils de soudage par résistance existent dans lesquels il est possible d'augmenter cette distance en manipulant manuellement l'électrode mobile de la pince pour l'éloigner davantage de l'électrode fixe, c'est-à-dire de rétracter l'électrode mobile. Par exemple, les moyens de blocage de l'électrode mobile dans la position de repos peuvent comprendre un moyen de serrage, telle qu'une bague de serrage, au contact duquel l'électrode mobile est bloquée et ne peut s'éloigner davantage de l'électrode fixe. En particulier, le moyen de serrage est conçu pour, d'une part, être manuellement serré sur la deuxième partie du bras en vue de maintenir l'électrode mobile dans sa position de repos. D'autre part, suite au desserrage manuel du moyen de serrage, il est possible d'agir directement sur l'électrode mobile, et notamment de l'éloigner davantage de l'électrode fixe avant de le resserrer manuellement pour maintenir l'électrode mobile dans une nouvelle position de repos.

Cependant, avec un tel moyen de serrage, il est nécessaire qu'un opérateur intervienne manuellement sur l'électrode mobile pour la déplacer en vue de modifier sa position de repos. Par ailleurs, l'efficacité de serrage d'un tel moyen de serrage se dégrade inévitablement avec le temps, en particulier au grès des cycles de serrage desserrage.

### Objectifs de l'invention

La présente invention propose un appareil de soudage doté d'un bras à mouvement linéaire pour pince de soudage par points à mouvement en « C ».

L'appareil de soudage dispose d'un mécanisme permettant d'une part, de déplacer l'électrode mobile entre la position de serrage, c'est-à-dire la position de travail, et la position de repos, et d'autre part, de déplacer l'électrode mobile depuis la première position de repos vers une position de retrait située à une distance d'éloignement de la position de travail supérieure à la distance d'éloignement séparant la position de travail de la position de repos.

De plus, le déplacement de l'électrode mobile entre sa position de repos et sa position de retrait s'effectue en s'affranchissant d'une manipulation manuelle de l'électrode mobile.

### Exposé de l'invention

A cet effet, l'invention concerne un appareil de soudage par résistance comportant une pince destinée à supporter un bras comportant une première partie supportant une électrode fixe et une deuxième partie supportant une électrode mobile en translation, les électrodes étant destinées à être parcourues par un courant électrique et à enserrer des éléments métalliques pour les souder, l'électrode mobile étant configurée pour se déplacer entre :
- une position de travail dans laquelle les électrodes enserrent les éléments métalliques à souder,
- une première position d'ouverture permettant d'insérer, entre les électrodes disposées en face l'une de l'autre, les éléments métalliques à souder dans laquelle l'électrode mobile est dans une première position de repos et située à une première distance de l'électrode fixe,
- une deuxième position d'ouverture permettant d'insérer, entre les électrodes disposées en face l'une de l'autre, les éléments métalliques à souder dans laquelle l'électrode mobile est dans une deuxième position de repos et située à une deuxième distance de l'électrode fixe, supérieure à la première distance,

l'appareil de soudage comprenant des moyens de blocage de l'électrode mobile dans la première position de repos et des moyens d'actionnement destinés à agir sur les moyens de blocage pour autoriser le mouvement de l'électrode mobile vers la deuxième position de repos sous l'effet de moyens de rappel.

La présence conjointe des moyens de blocage, des moyens d'actionnement et des moyens de rappel permet d'aisément autoriser le mouvement de l'électrode mobile depuis la première position de repos vers la deuxième position de repos. En particulier, les moyens de rappel permettent d'assurer le mouvement automatique de l'électrode mobile depuis la première position de repos vers la deuxième position de repos sans intervention manuelle sur l'électrode mobile, mais en agissant sur un bouton d'actionnement configuré pour activer les moyens d'actionnement.

De plus, le fait de s'autoriser à davantage ouvrir la pince permet d'insérer, entre les deux électrodes, des éléments métalliques, par exemple des tôles de carrosserie automobile, présentant des épaisseurs supérieures à la distance séparant la position de travail de l'électrode mobile de sa première position de repos dans laquelle elle est mécaniquement bloquée si aucun effort extérieur n'est appliqué sur les moyens d'actionnement.

Par ailleurs, lorsque les éléments métalliques à souder comprennent un obstacle, par exemple lorsque les tôles pour la fabrication de carrosserie automobile comportent un élément de carrosserie défini par une épaisseur supérieure à la distance séparant la position de travail de la première position de repos, il est ainsi possible de le contourner pour réaliser une soudure à un point précis se trouvant de l'autre côté de l'obstacle.

Avantageusement, l'invention comporte les caractéristiques suivantes, prises seules ou en combinaison :
- l'appareil de soudage par résistance comprend une tige de vérin sur laquelle est montée l'électrode mobile pour être entraînée en translation, la tige de vérin étant solidaire des moyens de rappel configurés pour ramener l'électrode mobile depuis la position de travail vers la première position de repos, puis vers la deuxième position de repos lorsque ce mouvement est autorisé ; cela permet de faciliter le déplacement de l'électrode mobile tout en ayant un mécanisme simple à mettre en œuvre ; cela permet également de disposer d'un vérin à simple effet qui comprend une seule chambre apte à se mettre, d'une part, en surpression pour engager le déplacement de l'électrode depuis la deuxième position de repos vers la première position de repos, et depuis la première position de repos vers la position de travail, et d'autre part, en dépression pour, en combinaison avec les moyens de rappel, engager le déplacement de l'électrode depuis la position de travail vers la première position de repos, et depuis la première position de repos vers la deuxième position de repos ;
- les moyens de blocage comportent un loquet de blocage pourvu d'un doigt de blocage configuré pour coopérer avec une butée ménagée sur la surface extérieure de la tige de vérin ; cela permet d'avoir des moyens de blocage faciles à mettre en œuvre avec le loquet de blocage qui garantit le blocage en translation du vérin depuis la première position de repos vers la deuxième position de repos lorsque celui-ci coopère avec la butée ;
- le loquet de blocage est monté pivotant autour d'un axe de rotation entre une position de blocage dans laquelle le doigt de blocage coopère avec la butée et une position de libération dans laquelle le mouvement de l'électrode mobile vers la deuxième position de repos est autorisé; cela permet d'avoir un mécanisme d'autorisation du mouvement de l'électrode mobile qui soit simple à mettre en œuvre ;
- les moyens d'actionnement comportent une manette de déverrouillage configurée pour actionner le pivotement du loquet de blocage; cela permet de permettre la commutation manuelle entre la position de blocage et la position de libération.

### Brève description des figures

D'autres caractéristiques et avantages de l'invention apparaîtront maintenant avec plus de détails dans le cadre de la description qui suit d'exemples de réalisation donnés à titre illustratif et non-limitatif en se référant aux figures annexées qui représentent :

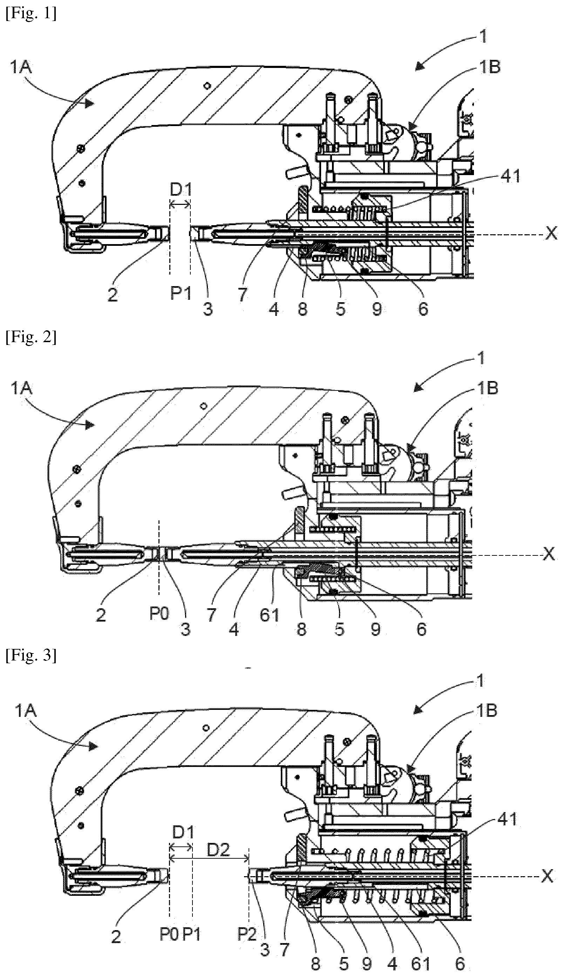

[Fig.1] : la [Fig.1] présente une vue schématique en coupe d'une pince d'un appareil de soudage comportant une électrode mobile selon un exemple de réalisation, l'électrode mobile se trouvant dans une première position de repos ;
[Fig.2] : la [Fig.2] présente une vue schématique en coupe d'une pince d'un appareil de soudage comportant une électrode mobile selon un exemple de réalisation, l'électrode mobile se trouvant dans une position de travail ;
[Fig.3] : la [Fig.3] présente une vue schématique en coupe d'une pince d'un appareil de soudage comportant une électrode mobile selon un exemple de réalisation, l'électrode mobile se trouvant dans une deuxième position de repos ;

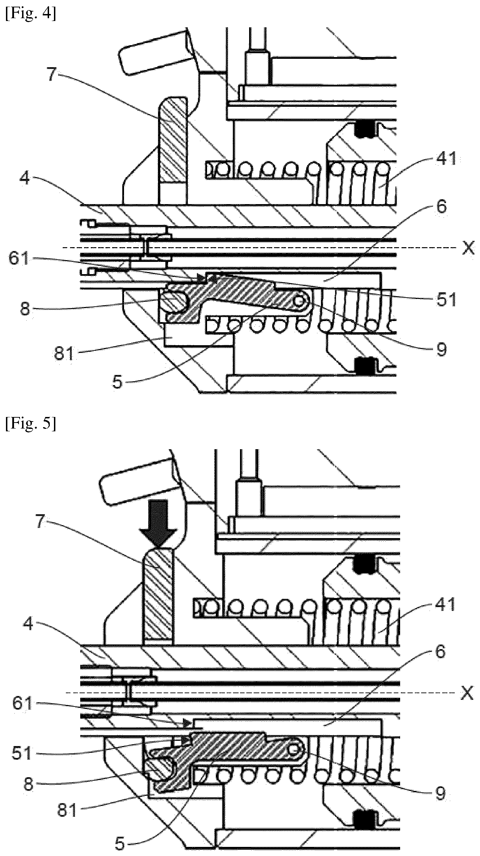

[Fig.4] : la [Fig.4] présente une vue schématique en coupe centrée sur les moyens de blocage de l'électrode mobile d'une pince d'un appareil de soudage selon un exemple de réalisation, les moyens de blocage se trouvant dans une position bloquant le mouvement de l'électrode mobile depuis la première position de repos vers la deuxième position de repos ;
[Fig.5] : la [Fig.5] présente une vue schématique en coupe centrée sur les moyens de blocage de l'électrode mobile d'une pince d'un appareil de soudage selon un exemple de réalisation, les moyens de blocage se trouvant dans une position autorisant le mouvement de l'électrode mobile depuis la première position de repos vers la deuxième position de repos ;

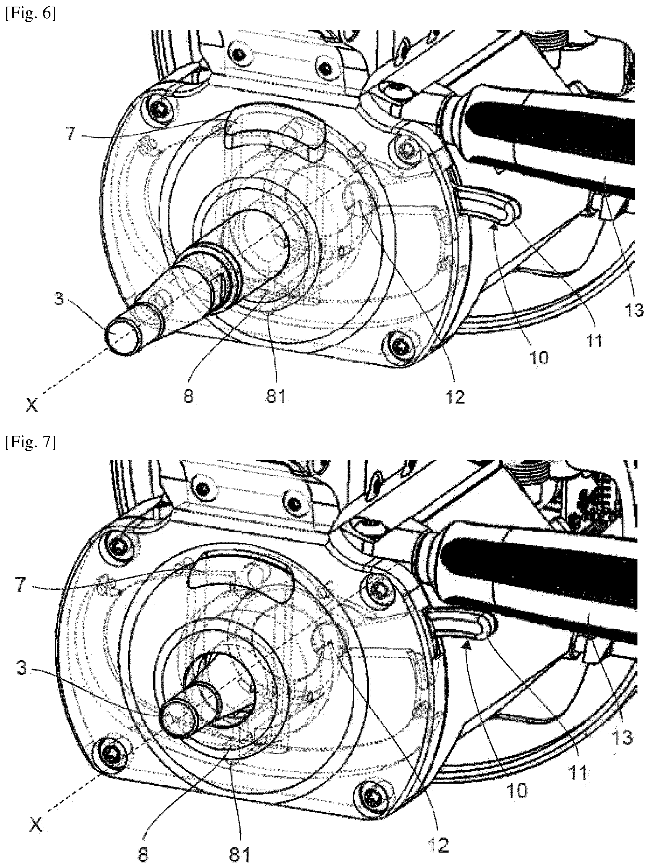

[Fig.6] : la [Fig.6] présente une vue de face de l'électrode mobile d'un appareil de soudage selon un exemple de réalisation, dans lequel les moyens de blocage se trouvent dans une position bloquant le mouvement de l'électrode mobile depuis la première position de repos vers la deuxième position de repos ;
[Fig.7] : la [Fig.7] présente une vue de face de l'électrode mobile d'un appareil de soudage selon un exemple de réalisation, dans lequel les moyens de blocage se trouvent dans une position autorisant le mouvement de l'électrode mobile entre la première position de repos et la deuxième position de repos.

### Description détaillée

Sauf précision contraire, un même élément apparaissant sur des figures différentes présente une référence unique.

L'invention concerne un appareil de soudage par résistance pour souder des éléments métalliques entre eux.

Par exemple, les éléments métalliques peuvent prendre la forme de tôles destinées à être utilisées dans la fabrication de carrosserie automobile.

Comme illustré dans les figures 1 à 3, l'appareil de soudage comprend une pince 1. La pince 1 comporte un bras comportant deux parties situées en vis-à-vis l'une de l'autre. Une première partie 1A se termine par une électrode fixe 2 et une deuxième partie 1B se termine par une électrode mobile 3.

De préférence, l'ensemble bras et pince 1 est tenu par un opérateur ou fixé à l'extrémité d'un bras robot. L'électrode fixe 2 et l'électrode mobile 3 sont conçues pour être parcourues par un courant électrique afin de souder les éléments métalliques enserrés entre l'électrode fixe 2 et l'électrode mobile 3 en réalisant un point de soudure. Ce courant électrique passe à travers les deux électrodes 2 et 3 par l'intermédiaire notamment de contacts électriques contenues dans chacune d'entre-elles.

De préférence, l'électrode mobile 3 est montée sur une tige 4 de vérin. Le vérin est, dans un exemple de réalisation, un vérin à simple effet et définie par une longueur de course prédéfinie.

De préférence, la tige 4 de vérin est insérée dans un cylindre dans lequel elle coulisse. La tige 4 de vérin porte alors à une extrémité l'électrode mobile 3 et à son extrémité opposée un piston coulissant dans le cylindre. Le déplacement de l'électrode mobile 3 s'effectue alors par les mouvements d'avant et arrière du vérin.

De préférence, du côté du piston coulissant est disposée une chambre du vérin. Les mouvements d'avant et arrière du vérin sont alors engagés par la mise alternativement en surpression fluidique et en dépression fluidique de la chambre du vérin. Par exemple, la surpression fluidique de la chambre du vérin est générée par la mise sous pression d'un fluide pneumatique, tel que de l'air comprimé, alors que la dépression fluidique est, quant à elle, engagée par retrait d'un volume d'air comprimé contenu dans la chambre du vérin.

De cette façon, l'électrode mobile 3 est entraînée en translation par la tige 4 de vérin dans un premier sens selon un axe longitudinal X et dans un deuxième sens, opposé au premier sens selon l'axe longitudinal X. Ainsi, la tige 4 de vérin, d'une part, avance dans le premier sens, lorsque la chambre du vérin est mise en surpression fluidique, pour que l'électrode mobile 3 et l'électrode fixe 2 enserrent les éléments métalliques, et d'autre part, recule dans le deuxième sens, lorsque la chambre de vérin est mise en dépression fluidique, pour dégager l'électrode mobile 3 des éléments métalliques et l'éloigner de l'électrode fixe 2 après réalisation éventuelle du point de soudure.

Selon l'invention, pour l'entraînement en translation de la tige 4 de vérin dans le deuxième sens, celle-ci est solidaire de moyens de rappel configurés pour dégager l'électrode mobile 3 des éléments métalliques lorsque la chambre de vérin est mise en dépression fluidique. En particulier, les moyens de rappel permettent de garantir le déplacement en translation de la tige 4 de vérin dans le deuxième sens lorsque la chambre de vérin est mise en dépression fluidique.

Dans un exemple de réalisation, les moyens de rappel contiennent un ressort de rappel 41 solidaire du piston coulissant. De préférence, le ressort de rappel 41 est un ressort de traction. En particulier, le piston coulissant est monté sur le ressort de rappel 41 qui, lorsque le ressort de rappel 41 est détendu, exerce une force de rappel sur la tige 4 de vérin pour que celle-ci se déplace dans le deuxième sens lorsque la chambre de vérin est mise en dépression fluidique.

De préférence, l'entraînement en translation de la tige 4 de vérin dans le premier sens est engagé lorsqu'un opérateur appuie de manière continue sur un bouton de commande pour actionner l'alimentation de la chambre de vérin en air comprimé afin de la mettre en surpression fluidique.

De préférence, l'entraînement en translation de la tige 4 de vérin dans le deuxième sens est engagé lorsque l'opérateur arrête d'appuyer sur le bouton de commande afin de mettre en dépression fluidique la chambre de vérin. Cela permet à la tige 4 de vérin, sous l'effet du ressort de rappel 41, de reculer sur toute la longueur de course du vérin si ce déplacement est autorisé, c'est-à-dire si la tige de vérin n'est pas entre temps bloquée dans une quelconque position.

Il est à noter que l'ensemble comportant le vérin est conçu afin de stabiliser la position de l'électrode mobile 3 lorsque les électrodes sont, soit en contact l'une de l'autre, soit en contact avec les éléments métalliques à souder.

En [Fig.1] est représentée la pince 1 ouverte selon une première position d'ouverture. En particulier, l'électrode mobile 3 est ici dans une première position de repos P1, dans laquelle il est possible d'insérer, entre l'électrode fixe 2 et l'électrode mobile 3 disposées alors en face l'une de l'autre, les éléments métalliques à souder.

L'électrode mobile 3 est alors située à une première distance D1 de l'électrode fixe 2.

L'électrode mobile 3 ne peut davantage s'éloigner de l'électrode fixe 2. En effet, cet éloignement est bloqué par des moyens de blocage qui seront décrits ultérieurement. De préférence, la première distance D1 est inférieure à la longueur de course du vérin.

En [Fig.2] est représentée la pince 1 fermée. L'électrode mobile 3 est ici dans une position de travail P0, dans laquelle il est possible de réaliser le point de soudure sur les éléments métalliques. L'électrode mobile 3 se déplace depuis la première position de repos P1 vers la position de travail P0 lorsque la fermeture de la pince 1 est engagée, c'est-à-dire lorsque la chambre de vérin est mise en surpression pour que la tige 4 de vérin avance. L'électrode mobile 3 se rapproche alors de l'électrode fixe 2 pour se stabiliser dans la position de travail P0.

Il est à noter que l'électrode mobile 3 se déplace également depuis la position de travail P0, représentée en [Fig.2], vers la première position de repos P1, représentée en [Fig.1], lorsque l'ouverture de la pince 1 est engagée. En particulier, au cours de ce déplacement, la tige 4 du vérin recule jusqu'au verrouillage des moyens de blocage.

Après avoir agi sur les moyens de blocage pour les déverrouiller, via des moyens d'actionnement qui seront décrits ultérieurement, l'électrode mobile 3 se déplace depuis la première position de repos P1 vers une deuxième position de repos P2 représentée en [Fig.3]. Ce déplacement est autorisé par un opérateur lorsqu'une sur-ouverture de la pince 1 est souhaitée de sorte à l'ouvrir davantage.

En particulier, la [Fig.3] représente la pince 1 ouverte selon la deuxième position d'ouverture. Dans la deuxième position d'ouverture, il est possible d'insérer, entre l'électrode fixe 2 et l'électrode mobile 3 disposées alors en face l'une de l'autre, des éléments métalliques à souder définis par une épaisseur supérieure aux éléments métalliques qui pouvaient s'insérer au travers de la pince 1 lorsque l'électrode mobile 3 était dans la première position de repos P1.

Il est à noter que dans la deuxième position d'ouverture, l'électrode mobile 3 est donc située à une deuxième distance D2 de l'électrode fixe 2 qui est supérieure à la première distance D1.

Ainsi, lorsque la chambre de vérin est mise en dépression en vue de reculer la tige 4 de vérin sous l'effet du ressort de rappel 41 solidaire du piston coulissant, l'électrode mobile 3 se déplace depuis la position de travail P0 vers la première position de repos P1, puis vers la deuxième position de repos P2 lorsque ce mouvement est autorisé, c'est-à-dire lorsque la tige 4 de vérin n'est pas bloquée par les moyens de blocage.

Les figures 4 et 5 représentent notamment un exemple de réalisation des moyens de blocage. En particulier, la [Fig.4] représente les moyens de blocage dans une position de verrouillage, c'est-à-dire dans une position de blocage, alors que la [Fig.5] représente les moyens de blocage dans une position de déverrouillage, c'est-à-dire dans une position de libération de la tige 4 de vérin.

En particulier, les moyens de blocage comportent ici une rainure 6 longitudinale ménagée sur la surface extérieure de la tige 4 de vérin et selon son axe longitudinale X. De préférence, la rainure 6 longitudinale est une rainure de clavette.

Les moyens de blocage comportent en outre un loquet 5 de blocage pourvu d'un doigt de blocage configuré pour s'insérer dans la rainure 6 longitudinale et réaliser avec elle une liaison glissière.

En particulier, la rainure 6 comporte une paroi transversale à l'axe longitudinal X formant une butée 61 au contact d'une surface de blocage 51 du doigt de blocage. De préférence, la surface de blocage 51 du doigt de blocage est une surface plane.

De préférence, le loquet 5 de blocage est solidaire des moyens d'actionnement décrits ultérieurement. Les moyens d'actionnement sont configurés pour abaisser le loquet 5 de blocage de sorte à passer depuis la position de blocage telle qu'illustré en [Fig.4], vers la position de libération telle qu'illustré en [Fig.5] lorsqu'une force est exercée sur ces derniers (la force étant représentée par une flèche en [Fig.5]).

En particulier, les moyens d'actionnement sont configurés pour maintenir, lorsqu'ils ne sont pas actionnés, le loquet 5 de blocage relevé pour que le doigt de blocage affleure une surface glissante de la rainure 6 lorsque celle-ci se trouve en vis-à-vis du doigt de blocage. De cette façon, la butée 61 se déplace en translation selon l'axe longitudinal X alors que le doigt de blocage est maintenu au contact de la surface glissante de la rainure 6 lorsque l'électrode mobile 3 se déplace entre la position de travail P0 et la première position de repos P1. Ainsi, lorsque la surface de blocage 51 du doigt de blocage est en contact de la butée 61, le déplacement de l'électrode mobile 3 depuis la première position de repos P1 vers la deuxième position de repos P2 est bloqué.

Pour autoriser le déplacement de la tige 4 de vérin vers l'arrière en vue de déplacer l'électrode mobile 3 de la première position de repos P1 vers la deuxième position de repos P2, un opérateur exerce une force sur les moyens d'actionnement pour abaisser le loquet 5 de blocage afin de retirer le doigt de blocage de la rainure 6. Cela permet d'éviter le contact de la surface de blocage 51 du doigt de blocage avec la butée 61.

Selon un exemple de réalisation, le loquet 5 de blocage est de forme oblongue et comporte alors deux extrémités. Ainsi, pour le relever et l'abaisser, sa première extrémité est montée pivotant autour d'un axe de rotation 9 formé par une liaison pivot reliant la première extrémité du loquet 5 de blocage et la deuxième partie du bras.

La deuxième extrémité du loquet 5 de blocage est, quant à elle, reliée aux moyens d'actionnement qui comportent, selon un exemple de réalisation illustré aux figures 6 et 7, un coulisseau 7, une manette 10 de déverrouillage se terminant, de préférence, par un doigt de déverrouillage 11, et un ressort de maintien configuré pour maintenir le loquet 5 de blocage relevé lorsque la manette 10 de déverrouillage n'est pas actionnée. Il est à noter que le doigt de déverrouillage 11 peut prendre la forme d'un bouton d'actionnement de tout type.

De préférence, le coulisseau 7 est de forme oblongue et comporte alors deux extrémités. Le coulisseau 7 comporte également un orifice débouchant au travers duquel est introduite l'électrode mobile 3 pour permettre son déplacement en translation entre les différentes positions précitées. Une première extrémité du coulisseau 7 est liée à la deuxième extrémité du loquet 5 de blocage, par exemple via un élément liaison 8, soit qui fait partie intégrante du coulisseau 7 ou du loquet 5 de blocage, soit qui est un élément à part entière. Ici, l'élément liaison 8 est une extension de la première extrémité du coulisseau qui s'imbrique dans la deuxième extrémité du loquet 5 de blocage afin de créer une liaison mobile entre le loquet 5 de blocage et le coulisseau 7.

Selon un exemple de réalisation, la manette 10 de déverrouillage comprend une tige comportant une première extrémité et une deuxième extrémité, les extrémités étant inclinées l'une de l'autre selon un angle d'inclinaison, par exemple, supérieur à 90°. De préférence, la première extrémité de la tige s'insère dans une deuxième extrémité du coulisseau 7, et la deuxième extrémité de la tige se termine par le doigt de déverrouillage 11. La tige est montée pivotante autour d'une liaison pivot 12 pratiquée, de préférence, au niveau de l'angle d'inclinaison, de sorte à mettre le coulisseau 7 en mouvement.

Le coulisseau 7 est en particulier configuré pour se déplacer en translation selon une direction sensiblement transversale à l'axe longitudinale X entre la position de blocage et la position de libération des moyens de blocage.

En particulier, lorsque le coulisseau 7 est dans une position relevée comme illustré aux figures 4 et 6, le doigt de blocage du loquet 5 de blocage est inséré dans la rainure 6. L'électrode mobile 3 est alors bloquée dans la première position de repos P1. Lorsque le coulisseau 7 est dans une position abaissée comme illustré aux figures 5 et 7, le doigt de blocage est retiré de la rainure 6. Dans cette situation, une partie de la première extrémité du coulisseau 7 et/ou une partie de la deuxième extrémité du loquet 5, et éventuellement également l'élément de liaison 8, sont logées dans un logement 81 approprié et pratiqué dans la deuxième partie 1B du bras de la pince 1. L'électrode mobile 3 est alors amenée dans la deuxième position de repos P2. Le coulisseau 7 passe depuis sa position relevée vers sa position abaissée lorsque, de préférence, l'opérateur actionne manuellement le déverrouillage des moyens de blocage en exerçant, par exemple, une force sur le doigt de déverrouillage 11. Le coulisseau 7 passe depuis sa position abaissée vers sa position relevée par l'exercice d'une force appliquée par un élément de rappel. Le coulisseau 7 est maintenu dans sa position relevée par la force appliquée par l'élément de rappel lorsqu'aucune force n'est directement exercée sur le doigt de déverrouillage 11.

Dans un exemple de réalisation, la tige de la manette 10 de déverrouillage est montée sur le ressort de maintien qui est de préférence un ressort de compression. Ainsi, la pression du ressort de maintien, lorsque le ressort de maintien est comprimé, exerce une force sur le coulisseau 7 pour naturellement le relever et ainsi s'opposer à son déplacement depuis sa position relevée vers sa position abaissée. Cela permet de maintenir le doigt de blocage du loquet 5 de blocage dans la rainure 6, afin de bloquer le déplacement vers l'arrière de la tige 4 de vérin, lorsqu'aucune force n'est exercée sur le doigt de déverrouillage 11.

De préférence, la manette 10 de déverrouillage est reliée à la deuxième partie 1B du bras de la pince 1 par la liaison pivot 12. Ainsi, le coulisseau 7 se déplace depuis sa position relevée vers sa position baissée lorsque l'opérateur exerce une force de rotation sur le doigt de déverrouillage 11. Par exemple, la force de rotation que doit exercer l'opérateur sur le doigt de déverrouillage 11 pour déverrouiller les moyens de blocage est une force exercée dans le sens antihoraire. Il est à noter que le doigt de déverrouillage 11 se déplace ensuite naturellement, via la force exercée par le ressort de maintien, dans le sens horaire pour retrouver sa position d'équilibre, c'est-à-dire sa position lorsque le coulisseau 7 est dans sa position relevée.

Il est à noter que lorsque le doigt de déverrouillage 11 est dans sa position d'équilibre, les moyens de blocage et d'actionnement sont suffisamment rigides pour ne pas se déformer.

Il est indiqué par ailleurs que la pince 1 dispose de moyen de préhension et de manipulation tel qu'une poignée 13, éventuellement amovible, fixée à la deuxième partie 1B du bras de la pince 1.

La pince 1 décrite ci-dessus présente l'avantage de pouvoir s'ouvrir selon deux positions d'ouverture : une position d'ouverture correspondant à la première position de repos P1 de l'électrode mobile 3, et une position de sur-ouverture correspondant à la deuxième position de repos P2 de l'électrode mobile 3.

Cela permet d'adapter la pince 1 à des épaisseurs d'éléments métalliques supérieures à la distance séparant les électrodes 2, 3 dans la première position de repos P1, mais aussi de simplifier le positionnement des électrodes de part et d'autre d'éléments métalliques à souder lorsque l'accès à ces éléments est réduit et difficile.

Selon l'invention, il est possible de procéder à cette sur-ouverture sans manipuler manuellement l'une ou l'autre des électrodes ou recourir à un circuit pneumatique.

Bien que la présente invention ait été décrite en référence aux modes de réalisation particuliers illustrés, celle-ci n'est nullement limitée par ces modes de réalisation, mais ne l'est que par les revendications annexées. On notera que des changements ou des modifications pourront être apportés par l'homme du métier.

## Revendications

1. Appareil de soudage par résistance comprenant une pince (1) destinée à supporter un bras comportant une première partie (1A) supportant une électrode fixe (2) et une deuxième partie (1B) supportant une électrode mobile (3) en translation, les électrodes (2,3) étant destinées à être parcourues par un courant électrique et à enserrer des éléments métalliques pour les souder, **caractérisé en ce que** l'électrode mobile (3) est configurée pour se déplacer entre :
- une position de travail (P0) dans laquelle les électrodes (2,3) enserrent les éléments métalliques à souder,
- une première position d'ouverture permettant d'insérer, entre les électrodes (2,3) disposées en face l'une de l'autre, les éléments métalliques à souder dans laquelle l'électrode mobile (3) est dans une première position de repos (P1) et située à une première distance (D1) de l'électrode fixe (2),
- une deuxième position d'ouverture permettant d'insérer, entre les électrodes (2,3) disposées en face l'une de l'autre, les éléments métalliques à souder dans laquelle l'électrode mobile (3) est dans une deuxième position de repos (P2) et située à une deuxième distance (D2) de l'électrode fixe (2), supérieure à la première distance (D1), l'appareil de soudage comprenant des moyens de blocage de l'électrode mobile (3) dans la première position de repos (P1) et des moyens d'actionnement destinés à agir sur les moyens de blocage pour autoriser le mouvement de l'électrode mobile (3) vers la deuxième position de repos (P2) sous l'effet de moyens de rappel.

2. Appareil de soudage par résistance selon la revendication 1, comprenant une tige (4) de vérin sur laquelle est montée l'électrode mobile (3) pour être entraînée en translation, la tige (4) de vérin étant solidaire des moyens de rappel configurés pour ramener l'électrode mobile (3) depuis la position de travail (P0) vers la première position de repos (P1), puis vers la deuxième position de repos (P2) lorsque ce mouvement est autorisé.

3. Appareil de soudage par résistance selon la revendication 2, dans lequel les moyens de blocage comportent un loquet (5) de blocage pourvu d'un doigt de blocage configuré pour coopérer avec une butée (61) ménagée sur la surface extérieure de la tige (4) de vérin.

4. Appareil de soudage par résistance selon la revendication 3, dans lequel le loquet (5) de blocage est monté pivotant autour d'un axe de rotation (9) entre une position de blocage dans laquelle le doigt de blocage coopère avec la butée (61) et une position de libération dans laquelle le mouvement de l'électrode mobile (3) vers la deuxième position de repos (P2) est autorisé.

5. Appareil de soudage par résistance selon la revendication 4, dans lequel les moyens d'actionnement comportent une manette (10) de déverrouillage configurée pour actionner le pivotement du loquet (5) de blocage.

## Patentansprüche

1. Widerstandsschweißeinrichtung, die eine Zange (1) umfasst, die dazu bestimmt ist, einen Arm zu stützen, der einen ersten Teil (1A) umfasst, der eine stationäre Elektrode (2) stützt, und einen zweiten Teil (1B), der eine bewegliche Elektrode (3) in Translation stützt, wobei die Elektroden (2, 3) dazu bestimmt sind, von einem elektrischen Strom durchlaufen zu werden und metallische Elemente zu umklammern, um sie zu schweißen,
**dadurch gekennzeichnet, dass** die bewegliche Elektrode (3) dazu konfiguriert ist, sich zu verschieben zwischen:
- einer Arbeitsposition (P0), in der die Elektroden (2, 3) die zu schweißenden metallischen Elemente umklammern,
- einer erste Öffnungsposition, die es erlaubt, zwischen die Elektroden (2, 3), die einander gegenüber angeordnet sind, die zu schweißenden metallischen Elemente einzufügen, , in der die bewegliche Elektrode (3) in einer ersten Ruheposition (P1) ist und sich in einem ersten Abstand (D1) von der stationären Elektrode (2) befindet,
- eine zweite Öffnungsposition, die es erlaubt, zwischen die Elektroden (2, 3), die einander gegenüber angeordnet sind, die zu schweißenden metallischen Elemente einzufügen, in der die bewegliche Elektrode (3) in einer zweiten Ruheposition (P2) ist und sich in einem zweiten Abstand (D2) von der stationären Elektrode (2) befindet, die größer ist als der erste Abstand (D1), wobei die Schweißeinrichtung Mittel zum Blockieren der beweglichen Elektrode (3) in der ersten Ruheposition (P1) und Mittel zum Betätigen umfasst, die dazu bestimmt sind, auf die Blockierungsmittel einzuwirken, um die Bewegung der beweglichen Elektrode (3) zu der zweiten Ruheposition (P2) unter der Wirkung von Rückstellmitteln zu gestatten.

2. Widerstandsschweißeinrichtung nach Anspruch 1, die einen Zylinderschaft (4) umfasst, auf dem die bewegliche Elektrode (3) montiert ist, um in Translation angetrieben zu werden, wobei der Zylinderschaft (4) fest mit den Rückstellmitteln verbunden ist, die dazu konfiguriert sind, die bewegliche Elektrode (3) von der Arbeitsposition (P0) zu der ersten Ruheposition (P1) zurück zu holen, dann zu der zweiten Ruheposition (P2), wenn diese Bewegung gestattet wird.

3. Widerstandsschweißvorrichtung nach Anspruch 2, wobei die Blockierungsmittel eine Blockierungsklinke (5) umfassen, die mit einem Blockierungsfinger versehen ist, der dazu konfiguriert ist, mit einem Anschlag (61) zusammenzuwirken, der auf der Außenoberfläche des Zylinderschafts (4) eingerichtet ist.

4. Widerstandsschweißeinrichtung nach Anspruch 3, wobei die Blockierungsklinke (5) um eine Rotationsachse (9) zwischen einer Blockierungsposition, in der der Blockierungsfinger mit dem Anschlag (61) zusammenwirkt, und einer Freigabeposition, in der die Bewegung der beweglichen Elektrode (3) zu der zweiten Ruheposition (P2) gestattet ist, schwenkend montiert ist.

5. Widerstandsschweißeinrichtung nach Anspruch 4, wobei die Betätigungsmittel einen Entriegelungsgriff (10) umfassen, der zum Betätigen des Schwenkens der Blockierungsklinke (5) konfiguriert ist.

## Claims

1. Resistance welding device comprising a clamp (1) to support an arm including a first part (1A) supporting a stationary electrode (2) and a second part (1B) supporting a translationally movable electrode (3), the electrodes (2, 3) being configured to be passed through by an electrical current and positioned to clamp metal elements in order to weld them, **characterised in that** the movable electrode (3) is configured to be movable between:
a working position (P0) wherein the electrodes (2, 3) clamp the metal elements to be welded,
a first opening position making it possible to insert, between the electrodes (2, 3) disposed opposite one another, the metal elements to be welded wherein the movable electrode (3) is in a first resting position (P1) and located at a first distance (D1) from the stationary electrode (2),
a second opening position making it possible to insert, between the electrodes (2, 3) disposed opposite one another, the metal elements to be welded wherein the movable electrode (3) is in a second resting position and located at a second distance (D2) from the stationary electrode (2), greater than the first distance (D1) ;
the welding device comprising blocking means which blocks the movable electrode (3) in the first resting position (P1), and actuating means which are designed to act on the blocking means to permit the movement of the movable electrode (3) to the second resting position (P2) under an effect of return means.

2. Resistance welding device according to claim 1, comprising a cylinder rod (4) whereon the movable electrode (3) to be translationally driven is mounted, the cylinder rod (4) being integral with the return means configured to return the movable electrode (3) from the working position (P0) to the first resting position (P1), then to the second resting position (P2) when the movement is permitted.

3. Resistance welding device according to claim 2, wherein the blocking means comprises a blocking latch (5) provided with a blocking finger configured to cooperate with a stop (61) arranged on an outer surface of the cylinder rod (4).

4. Resistance welding device according to claim 3, wherein the blocking latch (5) is mounted pivotable about an axis of rotation (9) between a blocking position wherein the blocking finger cooperates with the stop (61) and a release position wherein the movement of the movable electrode (3) to the second resting position (P2) is permitted.

5. Resistance welding device according to claim 4, wherein the actuating means includes an unlocking lever (10) configured to actuate pivoting of the blocking latch (5).
